# EUROPEAN PATENT APPLICATION

(11) **EP 4 678 254 A1**
(43) Date of publication of application: **14.01.2026**
(21) Application number: 25185166.3
(22) Date of filing: 25.06.2025
(51) Int. Cl.: A63F 13/34, A63F 13/53, A63F 13/655, A63F 13/86, A63F 13/358

(54) **INFORMATION PROCESSING METHOD, INFORMATION PROCESSING APPARATUS, AND COMPUTER PROGRAM**

(30) Priority: 05.07.2024 JP 2024108751
(71) Applicant: Nintendo Co., Ltd., Kyoto-shi, Kyoto 601-8501 (JP)
(72) Inventor: FUJITA, Akifumi, Kyoto 601-8501 (JP)
(74) Representative: Bardehle Pagenberg Partnerschaft mbB Patentanwälte Rechtsanwälte

(57) **Abstract**

An information processing method includes distributing, at a distribution terminal, first data including image data of a game being executed and second data including captured image data obtained from a camera and area data indicating an area of a person included in the captured image data, receiving, at a reception terminal, the first data and the second data from the distribution terminal, and generating based on the area data, at the reception terminal, a distributed display image in which the area of the person in the captured image data is shown superimposed on an image of the game being executed in the distribution terminal.

## Description

The present disclosure relates to an information processing method, an information processing apparatus, and a computer program.

### INTRODUCTION

A game system including a camera has been known (for example, Japanese Patent Laying-Open No. 2016-126042).

### SUMMARY

The present disclosure provides a scheme that allows flexible use at a distribution destination, of an image of a person obtained from a camera.

(Configuration 1) An information processing method according to one embodiment includes distributing, at a distribution terminal, first data and second data, the first data including image data of a game being executed, the second data including captured image data obtained from a camera and area data indicating an area of a person included in the captured image data, receiving, at a reception terminal, the first data and the second data from the distribution terminal, and generating based on the area data, at the reception terminal, a distributed display image in which the area of the person in the captured image data is shown superimposed on an image of the game being executed in the distribution terminal.

According to Configuration 1, for example, in the reception terminal, an image of a person in an image captured by the camera of the distribution terminal is shown superimposed on the image of the game being executed in the distribution terminal, so that a user who uses the reception terminal can readily recognize a player of the game who distributes the image. Since the first data including the image data and the second data including the captured image data and the area data are distributed independently of each other, in the reception terminal, handling of processing for generating the image of the game based on the image data, processing for generating the image of the person based on the captured image data and the area data, and the like can be simplified.

(Configuration 2) In Configuration 1, in the second data, the captured image data may be compressed with a first compression method and the area data may be compressed with a second compression method different from the first compression method. According to Configuration 2, the compression method suitable for each of the captured image data and the area data is adopted, so that the image of the person without a feeling of strangeness can be generated.

(Configuration 3) In Configuration 1 or 2, the second compression method may be less in data loss than the first compression method. The area data is relatively great in influence on quality by data loss, whereas the captured image data is relatively less in influence on quality by data loss. Therefore, according to Configuration 3, while quality of the generated image of the person is maintained, an amount of data of the second data can efficiently be reduced.

(Configuration 4) In Configuration 2 or 3, the first compression method may be lossy compression. The second compression method may be lossless compression. The area data is smaller in amount of data than the captured image data. By adopting lossless compression as a scheme for compression of the area data, a feeling of strangeness due to an error or the like of the area of the person can be suppressed.

(Configuration 5) In any of Configurations 1 to 4, the second data may be stream data in conformity with H.264 standard. The second data may include image stream data including the captured image data and non-image stream data including the area data. According to Configuration 5, since the image stream data including the image data and the non-image stream data including the area data are included in the same stream data, time lag between the image data and the area data can be reduced.

(Configuration 6) In Configuration 5, the image stream data may each be an NAL unit including control information indicating that the image data is included and one frame of the captured image data. The non-image stream data may each be an NAL unit including control information indicating that non-image data is included and one frame of the area data. According to Configuration 6, with a structure of the NAL unit defined under the H.264 standard, the image data and the area data can be distributed with the same stream data.

(Configuration 7) In any of Configurations 1 to 6, the generating the distributed display image may include setting, based on the area data included in the second data, an area other than the area of the person in the captured image data included in the first data such that the image of the game being executed, on which the area other than the area of the person is to be superimposed, is preferentially shown. According to Configuration 7, since the image of the person can be generated by determining the image to preferentially be shown based on the area data, processing for generating the image in the reception terminal can be simplified.

(Configuration 8) In any of Configurations 1 to 7, the area data may be generated based on a contour of the person included in the captured image data. According to Configuration 8, only the person included in the captured image data can be superimposed on the image of the game.

(Configuration 9) According to one embodiment, an information processing system that performs the information processing method according to any of Configurations 1 to 8 is provided.

(Configuration 10) According to one embodiment, an information processing apparatus that operates as the distribution terminal in the information processing method according to any of Configurations 1 to 8 is provided.

(Configuration 11) According to one embodiment, an information processing apparatus that operates as the reception terminal in the information processing method according to any of Configurations 1 to 8 is provided.

(Configuration 12) According to one embodiment, a computer program that causes a computer to perform the information processing method according to any of Configurations 1 to 8 is provided.

(Configuration 13) An information processing method according to one embodiment includes distributing first data and second data, the first data including image data of a game being executed, the second data including captured image data obtained from a camera and area data indicating an area of a person included in the captured image data, and receiving the first data and the second data from a distribution terminal and generating based on the area data, a distributed display image in which the area of the person in the captured image data is shown superimposed on an image of the game being executed in the distribution terminal.

(Configuration 14) According to one embodiment, an information processing apparatus that performs the information processing method according to Configuration 13 is provided.

(Configuration 15) According to one embodiment, a computer program that causes a computer to perform the information processing method according to Configuration 13 is provided.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a game system according to the present embodiment.
Fig. 2 shows an exemplary illustrative non-limiting drawing illustrating an exemplary hardware configuration of a game device according to the present embodiment.
Fig. 3 shows an exemplary illustrative non-limiting drawing illustrating an exemplary hardware configuration of a distribution server according to the present embodiment.
Fig. 4 shows an exemplary illustrative non-limiting drawing illustrating an exemplary screen image shown on a display of the game device according to the present embodiment.
Figs. 5A to 5D show exemplary illustrative non-limiting drawings illustrating exemplary display modes of a camera image shown on the display of the game device according to the present embodiment.
Fig. 6 shows an exemplary illustrative non-limiting drawing illustrating an exemplary data structure of distribution data in the game system according to the present embodiment.
Figs. 7A and 7B show exemplary illustrative non-limiting drawings illustrating exemplary mask data in the game system according to the present embodiment.
Fig. 8 shows an exemplary illustrative non-limiting drawing illustrating an exemplary data structure of reception data in the game system according to the present embodiment.
Fig. 9 shows an exemplary illustrative non-limiting drawing illustrating an exemplary software configuration in a distribution terminal in the game system according to the present embodiment.
Fig. 10 shows an exemplary illustrative non-limiting drawing illustrating an exemplary flowchart showing a processing procedure in the distribution terminal in the game system according to the present embodiment.
Fig. 11 shows an exemplary illustrative non-limiting drawing illustrating an exemplary software configuration in a reception terminal in the game system according to the present embodiment.
Figs. 12 and 13 show exemplary illustrative non-limiting drawings illustrating exemplary flowcharts showing a processing procedure in the reception terminal in the game system according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

An exemplary configuration of an information processing system according to the present embodiment will initially be described. An exemplary configuration of a game system as an example of the information processing system according to the present disclosure will be described below.

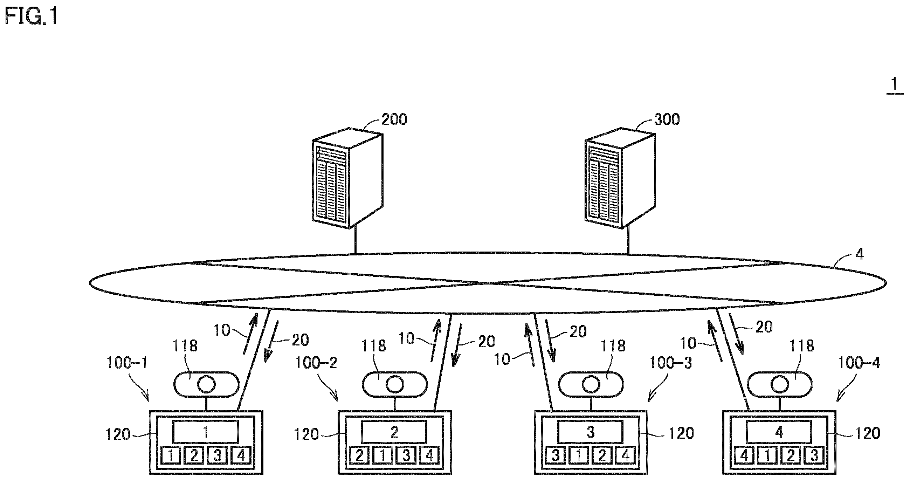

Referring to Fig. 1, a game system 1 includes one or more game devices 100. Game device 100 is an exemplary information processing apparatus. Fig. 1 shows an exemplary configuration of game system 1 including four game devices 100. When each of a plurality of game devices 100 should be specified in the description below, a sub number will be given for distinction (for example, game devices 100-1, 100-2, 100-3, and 100-4 shown in Fig. 1).

Each game device 100 can distribute image data generated by a game program or the like executed therein to another game device 100. Each game device 100 can receive image data distributed from another game device 100 and show an image based on the received image data on a display 120 thereof.

The term "distribution" herein encompasses processing for transmission of data by at least one game device 100 (an exemplary information processing apparatus) to one or more other game devices 100. A scheme to distribute data from certain game device 100 to another game device 100 includes a scheme to transmit data through one or more relay entities (for example, a distribution server 200) and a scheme to directly transmit data to a reception terminal (for example, P2P or the like). Data to be distributed may include various types of data in addition to image data.

Processing relating to distribution includes processing for reception of data by at least one game device 100 from at least another one game device 100.

For the sake of convenience of description, game device 100 that distributes image data to another game device 100 will also be referred to as a "distribution terminal" below, and game device 100 that receives image data from another game device 100 will also be referred to as a "reception terminal" below. A single game device 100 may fall under both of the distribution terminal and the reception terminal. Game system 1 can also be referred to as a distribution system.

The term "image data" herein encompasses data of moving images and data of one or more still images.

In an exemplary configuration shown in Fig. 1, game device 100-1 distributes distribution data 10 including image data generated thereby to one or more other game devices 100 and receives reception data 20 distributed by one or more other game devices 100. Game device 100-1 shows on display 120, an image including an image reproduced based on reception data 20. Game devices 100-2 to 100-4 perform processing similar to that performed by game device 100-1.

In Fig. 1, numbers "1" to "4" in images shown on displays 120 of game devices 100-1 to 100-4 mean images generated by game programs running in game devices 100-1 to 100-4, respectively. As will be described later, for example, of images shown on display 120 of game device 100-1, an image labeled with "1" above and an image labeled with "1" below do not have to exactly be the same, and they may be different in image quality from each other, or a different image may be superimposed.

Camera 118 is available in at least one of one or more game devices 100. In the exemplary configuration shown in Fig. 1, each of game devices 100-1 to 100-4 can use camera 118. Distribution data 10 distributed by game device 100 may include captured image data obtained from camera 118.

Game system 1 further includes a distribution server 200 and a management server 300. One or more game devices 100, distribution server 200, and management server 300 are connected to a network 4.

Distribution server 200 relays data distributed by game device 100. More specifically, distribution server 200 receives distribution data 10 from one or more game devices 100 and transmits one or more pieces of reception data 20 including one or more pieces of received distribution data 10 to one or more game devices 100.

Management server 300 is responsible for management necessary for distribution by one or more game devices 100. For example, management server 300 may determine one or more game devices 100 which are to participate in certain distribution. Management server 300 may determine a user account permitted to participate in distribution or may determine an identification number of game device 100 permitted to participate in distribution. In the former case, a user associated with the determined user account is permitted to participate in distribution. In the latter case, game device 100 provided with the determined identification number is permitted to participate in distribution.

Distribution server 200 and management server 300 may be implemented as a single physical server. Game system 1 may include a plurality of distribution servers 200 or may include a plurality of management servers 300. Distribution server 200 and management server 300 do not have to be separate in their function. Distribution server 200 and management server 300 may be virtual servers.

In the description below, one or more game devices 100 (or users) as a whole that participate in certain distribution are referred to as a "distribution group." The distribution group may dynamically be generated in response to a request from at least one game device 100 or may be generated in advance. Each of game devices 100 belonging to a certain distribution group can receive an image from another game device 100 (that is, can be a reception terminal). At least one of game devices 100 belonging to the distribution group can distribute image data to another game device 100 (that is, can be a distribution terminal).

An upper limit (which is also referred to as an "upper limit number of participants" below) may be set for the number of game devices 100 belonging to the same distribution group. The upper limit number of participants may be set, for example, to twelve. An upper limit (which is also referred to as an "upper limit number of distributors" below) may be set also for the number of game devices 100 (distribution terminals) that can distribute image data to another game device 100 in the same distribution group. The upper limit number of distributors may be set, for example, to four.

### [B. Exemplary Hardware Configuration]

An exemplary hardware configuration of each apparatus included in game system 1 according to the present embodiment will now be described.

### (b1: Game Device 100)

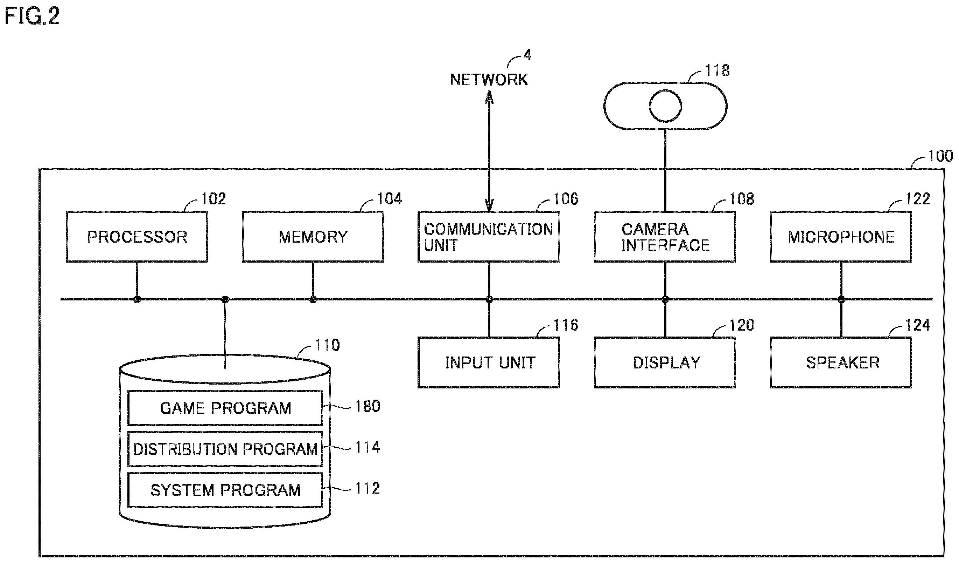

Game device 100 is a kind of computer. Referring to Fig. 2, game device 100 includes, for example, one or more processors 102, one or more memories 104, a communication unit 106, a camera interface 108, a storage 110, an input unit 116, display 120, a microphone 122, and a speaker 124.

Processor 102 is a processing entity for performing processing in game device 100. Processor 102 includes, for example, a central processing unit (CPU), a graphics processing unit (GPU), or the like. Processor 102 develops a program stored in storage 110 on memory 104 and executes the same.

Memory 104 is a volatile storage medium accessible by processor 102, and it includes, for example, a dynamic random access memory (DRAM), a static random access memory (SRAM), or the like.

Storage 110 is a non-volatile storage medium accessible by processor 102, and it includes, for example, a flash memory, a hard disk, or the like. Storage 110 may include, for example, a storage medium attachable to and removable from game device 100, such as a cartridge or an optical disc.

For example, a system program 112, a distribution program 114, and a game program 180 are stored in storage 110.

System program 112 includes a computer readable instruction for hardware control of game device 100, provision of a program execution environment, or the like.

Distribution program 114 includes a computer readable instruction for communication processing for distribution, processing necessary for image captured by camera 118, or the like.

Game program 180 is an exemplary application program and includes a computer readable instruction for execution of a game.

The term "processor" herein encompasses at least processing circuitry that performs processing in accordance with a computer readable instruction, such as a CPU or a GPU, and hard-wired circuitry such as an application specific integrated circuit (ASIC) or a field programmable gate array (FPGA).

The term "memory" herein encompasses at least memory 104 and storage 110.

In game device 100, a system on chip (SoC) in which functions of the processor, the memory, and the like are integrated may be adopted. In this case, the processor and the memory are located at the same SoC (integrated circuit). Therefore, the terms "processor" and "memory" herein encompass configurations independent of each other and an integrated configuration.

Communication unit 106 transmits and receives data to and from another game device 100, distribution server 200, management server 300, or the like over network 4. Connection of communication unit 106 to network 4 may be wired connection or wireless connection.

Camera interface 108 transmits and receives data to and from camera 118. Connection of camera interface 108 to camera 118 may be wired connection or wireless connection.

For wired connection of communication unit 106 and camera interface 108, for example, universal serial bus (USB) connection, parallel connection, or the like may be adopted. For wireless communication, for example, Bluetooth^{®}, ZigBee^{®}, wireless LAN (IEEE 802.11), or the like may be adopted.

Input unit 116 accepts a user operation. Input unit 116 includes, for example, a keyboard, a mouse, a game controller, a button, a cross-shaped key, and/or the like. Input unit 116 may be an interface with an apparatus (for example, a game controller) configured to accept a user operation. In other words, the apparatus configured to accept a user operation may be located outside game device 100.

Display 120 shows an image or a video image generated as a result of processing by processor 102. Display 120 includes, for example, a liquid crystal display (LCD), an organic EL display, or the like. Display 120 may be located outside game device 100. In this case, game device 100 may include an interface circuit with display 120.

Microphone 122 is arranged at a housing or the like of game device 100 and collects voice and sound to generate an audio signal. Speaker 124 is arranged at the housing or the like of game device 100 and generates voice and sound from an audio signal. At least one of microphone 122 and speaker 124 may be located outside game device 100.

Camera 118 generates camera data (moving image data or still image data) resulting from image capture of a subject, in accordance with a command from game device 100 or a predetermined condition.

Camera 118 includes an image capture element such as a charge-coupled device (CCD) image sensor or a complementary metal oxide semiconductor (CMOS) image sensor. A lens may be arranged in a stage preceding the image capture element.

Camera 118 may be, for example, a camera for video chat. Camera 118 may be a dedicated camera connectable only to a specific device or a general-purpose camera connectable to any device.

Camera 118 may be connectable to game device 100 through a wire or wirelessly, or may be incorporated in game device 100. A plurality of cameras 118 may be connectable to game device 100.

Though game device 100 is exemplified as an exemplary information processing apparatus, the information processing apparatus may be, for example, a personal computer, a television, a smartphone, a tablet, or the like.

### (b2: Distribution Server 200)

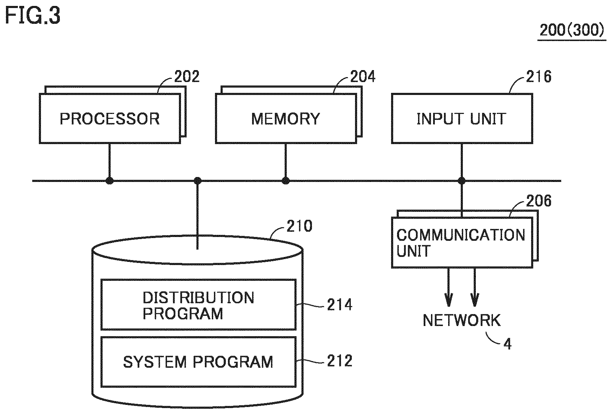

Referring to Fig. 3, distribution server 200 includes, for example, one or more processors 202, one or more memories 204, one or more communication units 206, a storage 210, and an input unit 216.

Processor 202 is a processing entity for performing processing in distribution server 200. Processor 202 includes, for example, a CPU, a GPU, or the like. Processor 202 develops a program stored in storage 210 on memory 204 and executes the same.

Memory 204 is a volatile storage medium accessible by processor 202, and it includes, for example, a DRAM, a SRAM, or the like.

Storage 210 is a non-volatile storage medium accessible by processor 202, and it includes, for example, a hard disk, a flash memory, or the like. For example, a system program 212, a distribution program 214, and the like are stored in storage 210.

System program 212 includes a computer readable instruction for hardware control of distribution server 200, provision of a program execution environment, or the like.

Distribution program 214 includes a computer readable instruction for performing relaying processing or the like necessary for distribution as will be described later.

Communication unit 206 transmits and receives data to and from game device 100, management server 300, or the like over network 4. Connection of communication unit 206 to network 4 may be wired connection or wireless connection.

Input unit 216 accepts a user operation. Input unit 216 includes, for example, a keyboard, a mouse, and/or the like.

### (b3: Management Server 300)

Since an exemplary hardware configuration of management server 300 is similar to the exemplary hardware configuration of distribution server 200 shown in Fig. 3, detailed description will not be repeated.

A distribution program stored in a storage of management server 300 may include a computer readable instruction for performing processing necessary for management of distribution as will be described later.

### [C. Exemplary Screen Image]

An exemplary screen image in distribution in game system 1 according to the present embodiment will now be described.

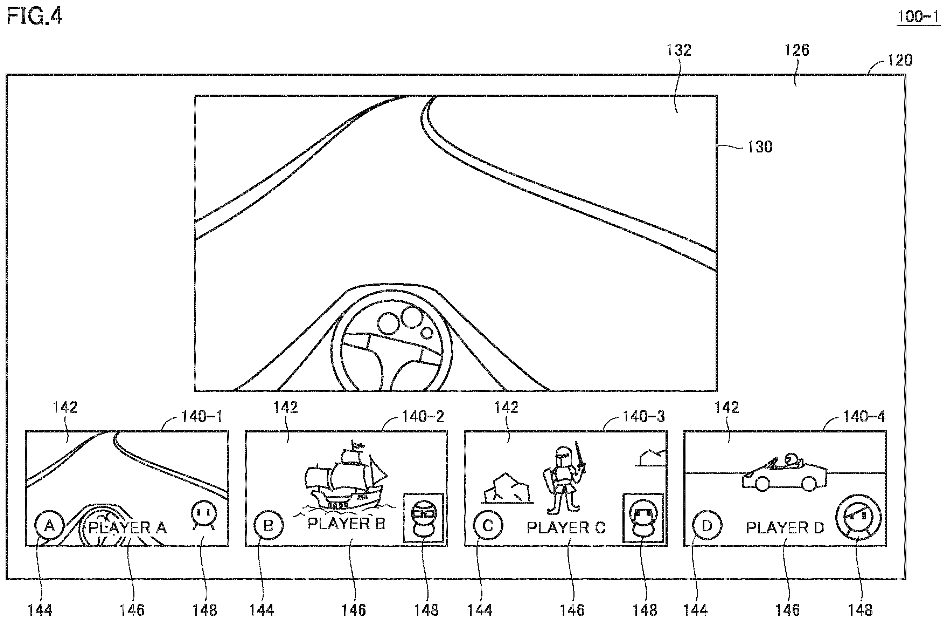

An exemplary screen image 126 shown on display 120 of game device 100-1 according to the present embodiment will be described with reference to Fig. 4. Fig. 4 shows exemplary screen image 126 of game device 100-1 belonging to the distribution group shown in Fig. 1. Game device 100-1 operates at least as the reception terminal.

Screen image 126 includes a main image 130 and distributed display images 140-1 to 140-4 (which may also collectively be referred to as a "distributed display image 140" below).

Each of distributed display images 140-2 to 140-4 is outputted based on image data distributed by the distribution terminal belonging to the distribution group. In the present embodiment, game device 100-1 itself is the distribution terminal. Therefore, one distributed display image 140-1 is outputted based on the image data generated in game device 100-1. Each of other game devices 100-2 to 100-4 shows distributed display image 140 the same as distributed display image 140-1 based on distribution data 10 distributed by game device 100-1. A position of display of distributed display image 140 may be different for each game device 100. In an example where game device 100-1 is not the distribution terminal, all of distributed display images 140-1 to 140-4 are outputted based on image data distributed by other distribution terminals.

Each of distributed display images 140-1 to 140-4 includes a game image 142, a user icon 144 of the user of the distribution terminal, a user name 146 of the user of the distribution terminal, and a camera image 148. At least one of user icon 144 and user name 146 does not have to be shown. At least one of game image 142 and camera image 148 does not have to be shown in some cases. In addition to or instead of these images, another image may be shown.

Game image 142 is outputted based on game image data generated by game program 180 running in the distribution terminal. The user of the distribution terminal may be permitted to set whether or not to distribute game image data. Game image 142 is not limited to the image generated by the running game program but may be any image generated in the distribution terminal. For example, game image 142 may be an image of a menu screen shown on display 120 of the distribution terminal or an image generated by distribution program 114 of the distribution terminal.

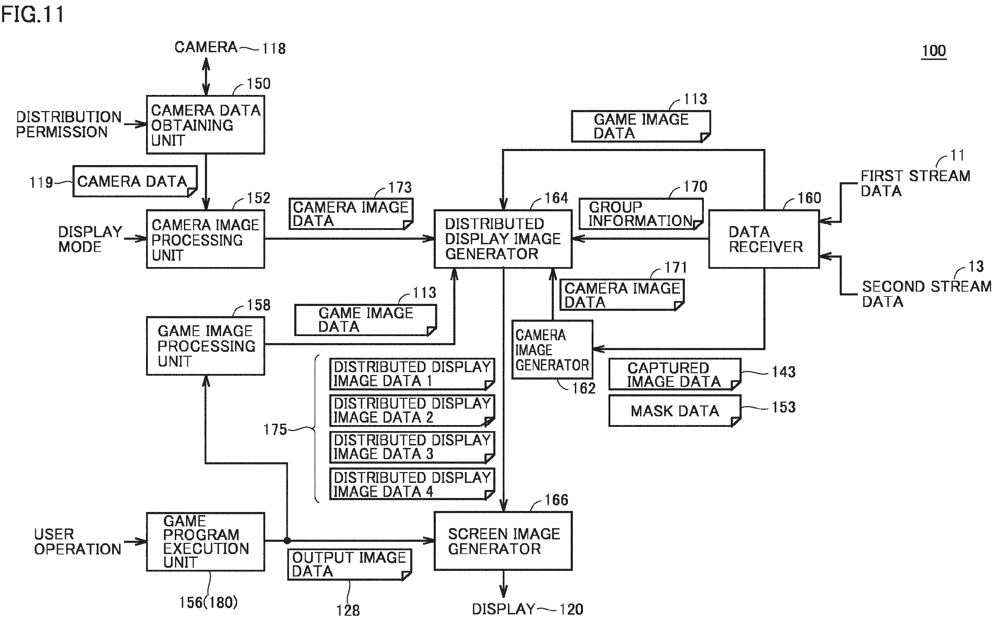

User icon 144 may be set or generated in advance by the user of the distribution terminal. User name 146 is shown based on information on the user (for example, a user account name) of the distribution terminal. An image to be shown as user icon 144 and text to be shown as user name 146 may be received by game device 100 or generated by game device 100 based on attribute information or the like (included in group information 170 shown in Fig. 11) provided from management server 300, of the user account who participates in the distribution group.

Camera image 148 is based on captured image data generated as a result of image captured by camera 118 connected to the distribution terminal. The user of the distribution terminal may be permitted to set whether or not to distribute the captured image data. For example, when the user of the distribution terminal does not permit distribution of the captured image data, a predetermined default image (for example, a black image) may be shown as camera image 148. Permission of distribution of the captured image data at the distribution terminal may be set by the user who is using the distribution terminal, another user (for example, a parent), or the distribution terminal or a running application. In an example where camera 118 is not connected to the distribution terminal, nothing is shown in an area where camera image 148 is to be shown, and game image 142 which is a background may be shown. Processing for showing camera image 148 or the like will be described later.

Main image 130 includes a game image 132. Game image 132 may be outputted based on game image data (output image data 128 which will be described later) generated by game program 180 executed in game device 100-1 (subject game device). In this case, while the user of game device 100-1 watches a status of a game (game image 142) (by another player) at the distribution terminal, the user himself/herself also can enjoy the game. Game image 132 may be outputted based on game image data received from the distribution terminal other than the subject game device.

Game image 132 included in main image 130 may be higher in resolution (or the number of pixels) or frame rate than game image 142 included in distributed display image 140.

### [D. Camera Image 148]

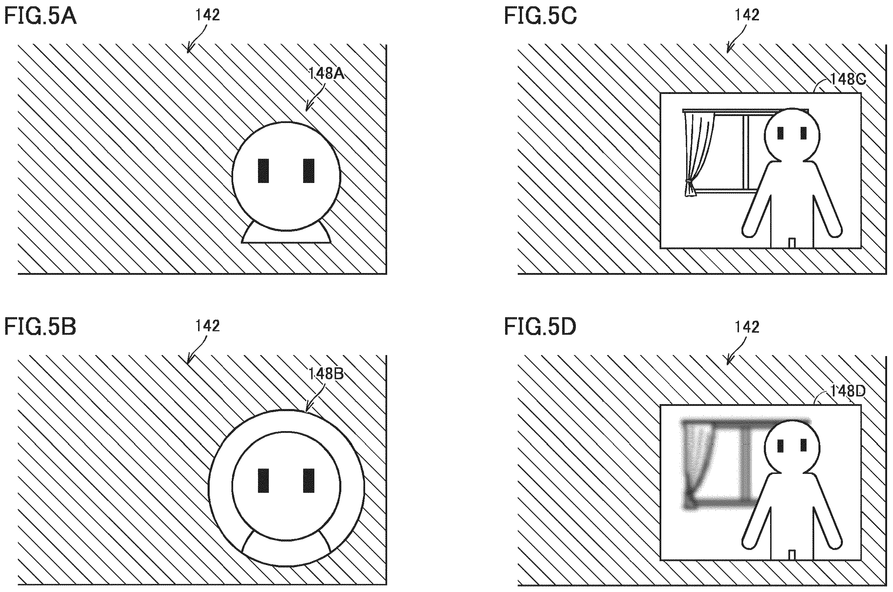

An exemplary camera image 148 in distributed display image 140 will now be described with reference to Figs. 5A to 5D. Figs. 5A to 5D show with hatching, an area where game image 142 is to be shown, so as to clarify a manner of display of camera image 148.

Though a display mode of camera image 148 is set on a distribution terminal side in the present embodiment, it may be set on a reception terminal side.

As shown in Figs. 5A to 5D, in distributed display image 140, camera image 148 is shown superimposed on an image of a game (game image 142) being executed in the distribution terminal.

Fig. 5A shows exemplary contour cut-out mode display 148A. Contour cut-out mode display 148A includes a part of a person in an image resulting from image captured in the distribution terminal. An area of the person in the image resulting from image captured in the distribution terminal is thus shown superimposed on image 142 of the game being executed in the distribution terminal. The area of the person that is superimposed is based on area data. As game image 142 is shown in an area other than the area of the person in the camera image superimposed on game image 142, the area of the person looks as if it were cut out and superimposed on game image 142.

According to contour cut-out mode display 148A, the user of the reception terminal can recognize a person (for example, a player) who distributes the image of the game more readily than in an example where the image of the game and the image of the user are separately shown. Furthermore, the user of the distribution terminal can hide an appearance of a room or the like. By adopting superimposed display, an area of the display can effectively be made use of. Furthermore, distributed display image 140 smaller in range of game image 142 hidden by camera image 148 can be generated. Though an area above the chest of a person is shown in the example shown in Fig. 5A, for example, an area of a whole body of the person included in the image resulting from image capture may be shown.

Fig. 5B shows exemplary face mode display 148B. Face mode display 148B includes an image in a predetermined shape accommodating a face of a person in the image resulting from image captured in the distribution terminal. The user of the reception terminal readily checks a facial expression or the like of a player who is playing a game. The predetermined shape is not limited, and may be, for example, one of a circular shape, an elliptical shape, and a polygonal shape. The area in the predetermined shape accommodating the face of the person in the image resulting from image captured in the distribution terminal is thus shown superimposed on image 142 of the game being executed in the distribution terminal. In face mode display 148B, the reception terminal cuts out the area in the predetermined shape from the captured image data distributed from the distribution terminal. Therefore, the distribution terminal generates and distributes the captured image data such that the face of the person is located at a position corresponding to a predetermined cut-out shape.

Fig. 5C shows exemplary non-process mode display 148C. Non-process mode display 148C includes an image resulting from image captured by camera 118 of the distribution terminal, as it is. Therefore, non-process mode display 148C (camera image 148) may include, as a subject, an object located in the background of the user, in addition to the user.

Fig. 5D shows exemplary background blur mode display 148D. Background blur mode display 148D (camera image 148) includes an image where a portion other than a person is blurred away, in the image resulting from image captured by camera 118 of the distribution terminal.

### [E. Distribution Data 10 and Reception Data 20]

Distribution data 10 and reception data 20 in distribution in game system 1 according to the present embodiment will now be described.

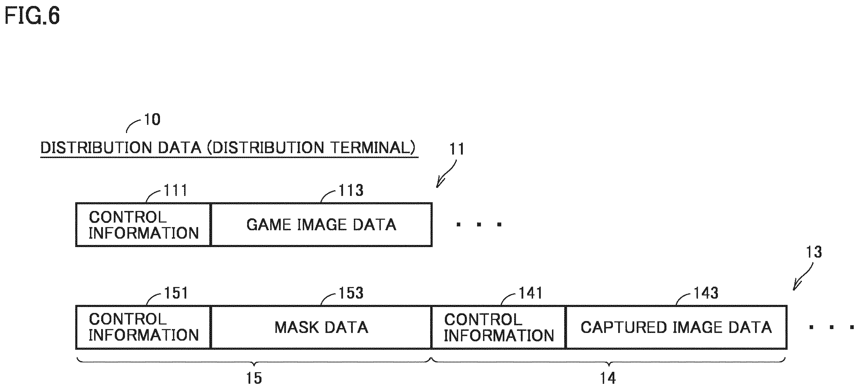

Referring to Fig. 6, distribution data 10 may be, for example, in a data format suitable for streaming. Distribution data 10 includes, for example, first stream data 11 and second stream data 13.

First stream data 11 includes image data necessary for generation of game image 142 of distributed display image 140. Second stream data 13 includes image data necessary for output of camera image 148 of distributed display image 140.

First stream data 11 includes, for example, control information 111 and game image data 113. Control information 111 includes, for example, a bit string indicating start of stream data, identification information indicating a type of data included in the stream data, and information indicating a data size. Game image data 113 includes image data of a game being executed in the distribution terminal.

Game image data 113 may include at least one of a key frame (a frame not subjected to interframe compression) and a differential frame (a delta frame).

Second stream data 13 may include mask stream data 15 and image stream data 14. Mask stream data 15 includes mask data necessary for providing contour cut-out mode display 148A (see Fig. 5A). Image stream data 14 includes image data necessary for output of camera image 148.

Mask stream data 15 includes, for example, control information 151 and mask data 153. Control information 151 may be similar to control information 111 of first stream data 11.

Mask data 153 is area data that specifies an area to be shown as camera image 148 of distributed display image 140, of captured image data 143. Mask data 153 indicates an area of a person included in captured image data 143.

Image stream data 14 includes, for example, control information 141 and captured image data 143. Control information 141 may be similar to control information 111 of first stream data 11.

Captured image data 143 is image data obtained from camera 118 of the distribution terminal. More specifically, captured image data 143 is generated based on camera data generated by image captured by camera 118 of the distribution terminal. The camera data outputted from camera 118 may be used as it is as captured image data 143, or the camera data outputted from camera 118 may be subjected to image processing and resultant camera data may be used as captured image data 143. The image processing includes, for example, extraction of a partial area of the camera data, adjustment (reduction/enlargement) of an image size, adjustment of image quality (brightness, contrast, color tone, or the like), or the like.

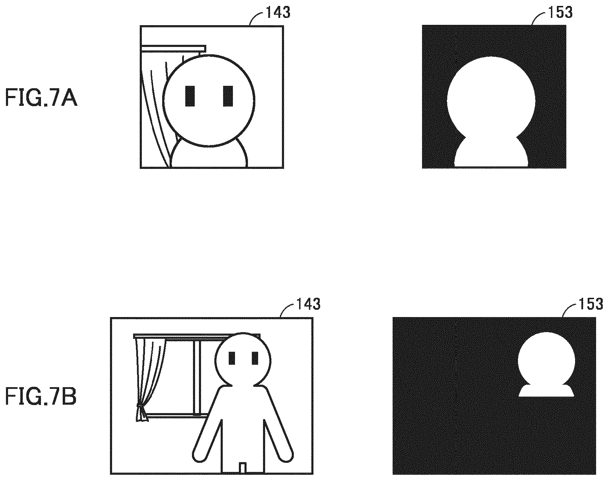

Fig. 7A shows an example where a partial image resulting from extraction of a part of the camera data outputted from camera 118 is adopted as captured image data 143. Fig. 7B shows an example where an entire image of the camera data outputted from camera 118 is adopted as captured image data 143. Though mask data 153 generated to finally show an upper body of a person is shown in the example in Fig. 7B, mask data 153 may be generated to finally show, for example, the whole body of the person. In the examples shown in Figs. 7A and 7B, captured image data 143 each includes as the subject, an object located in the background.

Mask data 153 is generated in correspondence with captured image data 143. For example, mask data 153 may be generated based on a contour of a person included in captured image data 143. At this time, the area of the person indicated by mask data 153 can also be concluded as an area surrounded by a line along the contour of the person.

The line along the contour of the person may be located slightly outside the contour of the person and does not have to extend strictly along the contour of the person. For example, the area of the person indicated by mask data 153 may include an area outside by a predetermined distance from the contour of the person. Therefore, the area of the person indicated by mask data 153 may include the background of the person included in the camera data.

Any image processing algorithm can be employed for processing for specifying the contour of the person. The area of the person indicated by mask data 153 may not only be generated based on the contour of the person but may also be determined with any method.

In the examples shown in Figs. 7A and 7B, mask data 153 includes information for specifying an area where a person is located in captured image data 143 and an area other than that. For example, mask data 153 is data for which two values (for example, "0" and "1") indicating whether or not an area is the area of the person are set for each pixel. Mask data 153 may be bicolor image data as in the examples shown in Figs. 7A and 7B.

The reception terminal outputs a distribution image showing camera image 148 as in contour cut-out mode display 148A, by using mask data 153 and captured image data 143 included in second stream data 13. The reception terminal may perform processing such that the area where the person is located in captured image data 143 is not effectively shown. For example, the area where no person is located may be transparent. Alternatively, the reception terminal may generate image data resulting from cut-out of the area where the person is located from captured image data 143.

According to contour cut-out mode display 148A shown in Fig. 5A, the area of the person is specified based on mask data 153, and hence such representation that the area of the person is superimposed on game image 142 can be realized.

Though an example in which binary pixel values are set for each pixel of mask data 153 is shown, multiple values may be set. For example, for the area where no person is located, "0" indicating deactivation of representation or "2" indicating blur may be set.

Though an example in which "1" is allocated to the area where the person is located is described, any value may be allocated so long as distinction between the area where the person is located and the area other than that can be made.

Second stream data 13 may include information indicating a display mode corresponding to captured image data 143. As second stream data 13 includes the information indicating the display mode, processing for generating distributed display image 140 in the reception terminal can be simplified or accelerated. By way of example, second stream data 13 may include information indicating a mode to show the contour of the person as being cut out.

In second stream data 13, a data compression method for mask data 153 and a data compression method for captured image data 143 may be different from each other. For example, since mask data 153 is binary image data, it may be outputted in a lossless compression image format such as a portable network graphics (PNG) format. Alternatively, mask data 153 may be compressed, for example, with run length encoding, Huffman coding, or the like which is exemplary lossless compression. In contrast, captured image data 143 may be compressed with an interframe differential method which is exemplary lossy compression. In this case, captured image data 143 includes at least one of a key frame (a frame not subjected to interframe compression) and a differential frame. In any case, the data compression method for mask data 153 is less in data loss than the data compression method for captured image data 143.

The display mode for camera image 148 in distributed display image 140 may be selected by the user of the distribution terminal. When one of a face mode, a non-process mode, and a background blur mode is selected, all pixel values of mask data 153 may be set to "1". Alternatively, since mask data 153 is substantially unnecessary, no mask data 153 (or mask stream data 15 itself) may be included in second stream data 13.

First stream data 11 and second stream data 13 may be generated in conformity with any moving image compression standard. For example, first stream data 11 and second stream data 13 may be generated in conformity with the H.264 (MPEG-4 AVC) standard. In other words, at least a part of first stream data 11 and second stream data 13 may be stream data in conformity with the H.264 standard.

In generation in conformity with the H.264 standard, each of mask stream data 15 and image stream data 14 included in second stream data 13 corresponds to a network abstraction layer (NAL) unit. In other words, second stream data 13 includes mask stream data 15 and image stream data 14 delimited by the NAL unit.

For example, mask stream data 15 corresponds to a non-VCL-NAL unit including mask data 153 which is exemplary area data. Control information 151 of mask stream data 15 may include information indicating being the non-VCL-NAL unit. Mask stream data 15 is thus an NAL unit including control information 151 indicating that non-image data is included in mask stream data 15 and one frame of mask data 153.

Image stream data 14 corresponds to a video coding layer (VCL)-NAL unit including captured image data 143. Control information 141 of image stream data 14 may include information indicating being the VCL-NAL unit and information indicating the key frame or the differential frame. Image stream data 14 is thus an NAL unit including control information 141 indicating that image data is included in image stream data 14 and one frame of captured image data 143.

For example, in processing of image stream data 14, mask stream data 15 received immediately before is used. In second stream data 13, mask stream data 15 and image stream data 14 may be arranged in any order. In second stream data 13, image stream data 14 and mask stream data 15 do not have to strictly alternately be arranged.

First stream data 11 and second stream data 13 may be different in frame rate from each other. For example, the frame rates of first stream data 11 and second stream data 13 may dynamically be varied depending on communication information, processing load imposed on the distribution terminal, the number of game devices 100 belonging to the distribution group, load imposed on distribution server 200, or the like.

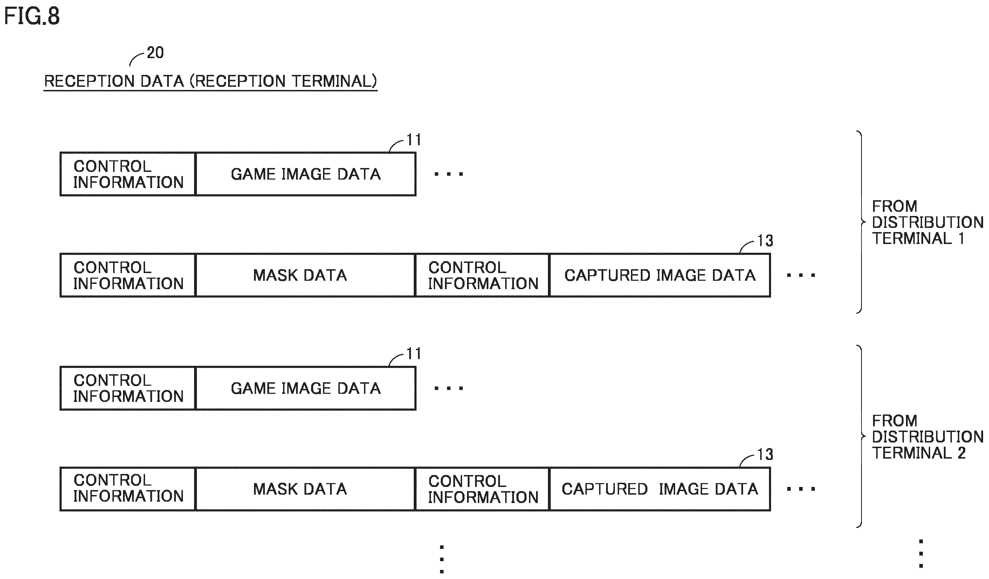

Referring to Fig. 8, reception data 20 includes, for example, distribution data 10 (first stream data 11 and second stream data 13) distributed from each of one or more distribution terminals.

The frame rates of first stream data 11 and second stream data 13 may be different for each distribution terminal.

When distribution server 200 relays distribution data 10 distributed from each of one or more distribution terminals, distribution server 200 may process a part or the entirety of distribution data 10 and thereafter transfer the resultant distribution data to the reception terminal.

### [F. Exemplary Processing for Distribution]

Exemplary processing for distribution in game device 100 will now be described.

### (f1: Distribution Terminal)

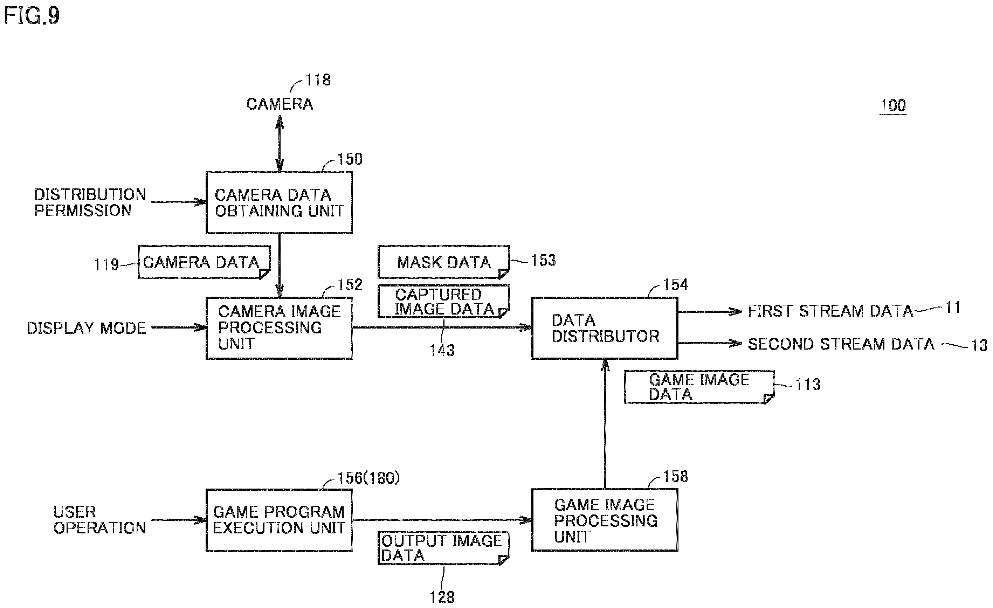

Referring to Fig. 9, an exemplary software configuration in the distribution terminal in game system 1 according to the present embodiment will be described with reference to Fig. 9. Fig. 9 shows an exemplary software configuration with attention being paid to an example where game device 100 operates as the distribution terminal, and does not show other processing modules for the sake of convenience of description.

Referring to Fig. 9, game device 100 that operates as the distribution terminal includes a camera data obtaining unit 150, a camera image processing unit 152, a data distributor 154, a game program execution unit 156, and a game image processing unit 158.

For example, camera data obtaining unit 150, camera image processing unit 152, data distributor 154, and game image processing unit 158 are implemented by execution of distribution program 114 by processor 102 of game device 100 in an environment where the processor executes system program 112. Game program execution unit 156 is implemented by execution of game program 180 by processor 102 of game device 100 in the environment where the processor executes system program 112.

Camera data obtaining unit 150 obtains camera data 119 outputted from camera 118. Camera data obtaining unit 150 may obtain camera data 119 only when distribution of captured image data is permitted.

Camera image processing unit 152 generates captured image data 143 based on camera data 119. Camera image processing unit 152 generates mask data 153 as necessary. As will be exemplified below, camera image processing unit 152 performs processing for generating captured image data 143 and processing for generating mask data 153 differently from each other, depending on the display mode.

When the contour cut-out mode is selected, camera image processing unit 152 specifies a position and a contour of the person included as the subject in camera data 119. Camera image processing unit 152 generates captured image data 143 based on camera data 119. Captured image data 143 may be the same as camera data 119 or may be image data resulting from adjustment of the image size of camera data 119 based on the position and the size of the area including the person.

When the face mode is selected, camera image processing unit 152 specifies a position of the face of the person included as the subject in camera data 119. Camera image processing unit 152 extracts an area (for example, in a rectangular shape) with the specified position being defined as the reference, adjusts the image size of the extracted area, and generates captured image data 143. When the face mode is selected, the reception terminal cuts out a predetermined shape the position and the size of which are set in advance from received captured image data 143. Therefore, camera image processing unit 152 determines an area to be extracted from camera data 119 such that the face of the person is located in the area in the predetermined shape cut out in the reception terminal.

When the non-process mode is selected, camera image processing unit 152 outputs camera data 119 as it is as captured image data 143.

When the background blur mode is selected, camera image processing unit 152 specifies the contour of the person included as the subject in camera data 119. Camera image processing unit 152 generates captured image data 143 with the area other than the contour of the specified person in camera data 119 being blurred away.

When camera image processing unit 152 is unable to specify a person or a face of the person in the example where the contour cut-out mode or the face mode is selected, it may output predetermined default image data (for example, black image data) as captured image data 143.

When one of the face mode, the non-process mode, and the background blur mode is selected, camera image processing unit 152 may generate mask data 153 all pixel values of which are "1" or does not have to generate mask data 153.

Game program execution unit 156 has a game proceed in response to a user operation in accordance with a computer readable instruction included in game program 180. Game program execution unit 156 outputs output image data 128 as the image data of the game being executed. Output image data 128 has the same resolution (or number of pixels) and frame rate as the images shown while the game is played by the user at game device 100.

Game image processing unit 158 generates game image data 113 from output image data 128. Game image processing unit 158 generates game image data 113, for example, by downsampling or down-converting output image data 128.

Data distributor 154 generates and distributes first stream data 11 based on game image data 113.

Data distributor 154 generates and distributes second stream data 13 based on captured image data 143 and mask data 153.

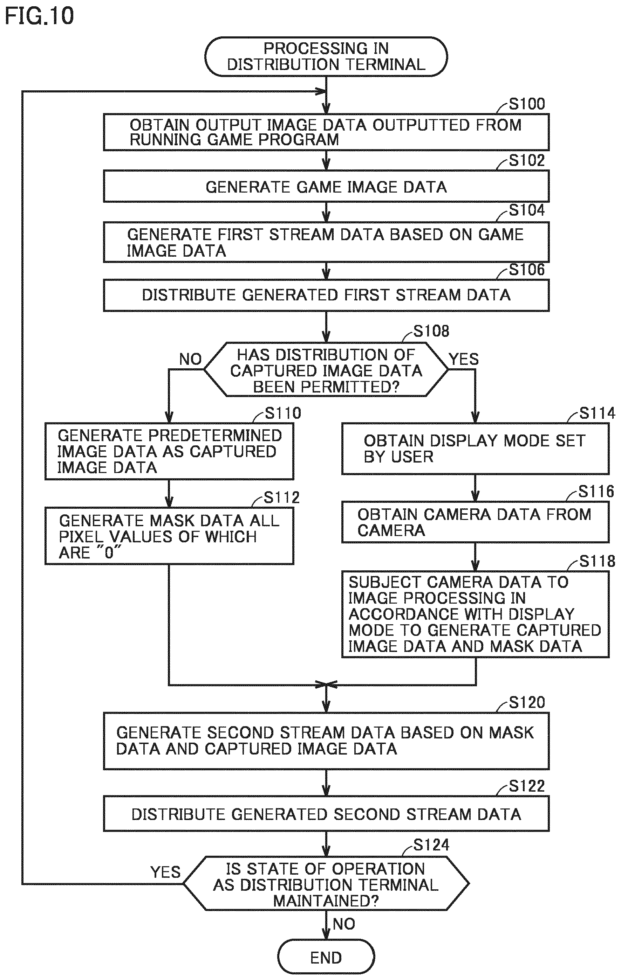

An exemplary processing procedure in the distribution terminal in game system 1 according to the present embodiment will be described with reference to Fig. 10. Each step shown in Fig. 10 is performed, for example, by execution of system program 112 and distribution program 114 by processor 102 of game device 100. Processor 102 of game device 100 is assumed to execute also game program 180.

Game device 100 is assumed to perform processing for participating in a distribution group in advance to belong to a certain distribution group and to operate as the distribution terminal in the distribution group.

Referring to Fig. 10, game device 100 obtains output image data 128 outputted from running game program 180 (step S100). Game device 100 generates game image data 113 from output image data 128 (step S102).

Game device 100 generates first stream data 11 based on game image data 113 (step S104) and distributes generated first stream data 11 (step S106).

Game device 100 determines whether or not distribution of the captured image data has been permitted (step S108).

When distribution of the captured image data has not been permitted (NO in step S108), game device 100 outputs predetermined image data (for example, black image data all pixel values of which are "0") as captured image data 143 (step S110) and generates mask data 153 all pixel values of which are "0" (step S112).

When distribution of the captured image data has been permitted (YES in step S108), game device 100 obtains the display mode set by the user (step S114). Game device 100 obtains camera data 119 from camera 118 (step S116), and subjects camera data 119 to image processing in accordance with the display mode to generate captured image data 143 and mask data 153 (step S118). Processing in step S118 is similar to processing described in connection with camera image processing unit 152 shown in Fig. 9.

Game device 100 generates second stream data 13 based on mask data 153 and captured image data 143 (step S120) and distributes generated second stream data 13 (step S122).

Game device 100 determines whether or not a state of operation as the distribution terminal is maintained (step S124). When the state of operation as the distribution terminal is maintained (YES in step S124), processing in step S100 or later is repeated. When the state of operation as the distribution terminal is no longer maintained (NO in step S124), the process ends.

In step S118, mask data 153 does not have to be generated. In addition, in step S120, mask data 153 does not have to be used for generation of second stream data 13 in some cases. Processing in step S112 may be skipped.

### (f2: Reception Terminal)

An exemplary software configuration in the reception terminal in game system 1 according to the present embodiment will be described with reference to Fig. 11. Fig. 11 shows an exemplary software configuration with attention being paid to an example where game device 100 operates as the reception terminal, and does not show other processing modules for the sake of convenience of description.

Referring to Fig. 11, game device 100 that operates as the reception terminal includes camera data obtaining unit 150, camera image processing unit 152, game program execution unit 156, game image processing unit 158, a data receiver 160, a camera image generator 162, a distributed display image generator 164, and a screen image generator 166.

For example, camera data obtaining unit 150, camera image processing unit 152, game image processing unit 158, data receiver 160, camera image generator 162, distributed display image generator 164, and screen image generator 166 are implemented by execution of distribution program 114 by processor 102 of game device 100 in the environment where the processor executes system program 112. Game program execution unit 156 is implemented by execution of game program 180 by processor 102 of game device 100 in the environment where the processor executes system program 112.

Camera data obtaining unit 150, camera image processing unit 152, game program execution unit 156, and game image processing unit 158 are activated when the reception terminal also serves as the distribution terminal. Since processing thereby is similar to the processing in the distribution terminal shown in Fig. 9, detailed description will not be repeated. Camera image processing unit 152 generates camera image data 173 to be used for display of camera image 148 of distributed display image 140 of the game device to which it belongs, rather than captured image data 143 and mask data 153. Camera image data 173 is image data, for example, for preferential display of an image (for example, a game image) on which the camera image is to be superimposed, in an area other than the area of the person. The distribution terminal may generate mask data 153 based on data used in generation of camera image data 173.

Game program execution unit 156 outputs output image data 128 as the image data of the game being executed.

Data receiver 160 receives first stream data 11 and second stream data 13 from each of one or more distribution terminals.

Camera image generator 162 generates camera image data 171 based on captured image data 143 and mask data 153 included in second stream data 13. Camera image data 171 is, for example, image data for preferential display of an image (for example, a game image) on which the camera image is to be superimposed, in the area other than the area of the person.

Camera image generator 162 masks the area other than the area of the person in captured image data 143, based on mask data 153. Masking processing includes setting the area other than the area of the person in captured image data 143 included in second stream data 13 such that game image data 113 (the image of the game being executed) on which the camera image is to be superimposed is preferentially shown, based on mask data 153 included in second stream data 13.

More specifically, camera image generator 162 may change a pixel value of a pixel (for example, a pixel for which "0" is set in mask data 153) corresponding to the area other than the area of the person, among pixels included in captured image data 143 to a value indicating transparency. Alternatively, camera image generator 162 may determine which pixel of game image data 113 and captured image data 143 is to be adopted as the pixel value of the corresponding pixel, in accordance with a value ("0" or "1") indicated by each pixel of mask data 153.

Distributed display image generator 164 generates distributed display image data 175 based on game image data 113 and camera image data 171 included in first stream data 11. More specifically, distributed display image generator 164 superimposes camera image data 171 on game image data 113. Distributed display image generator 164 may generate image data for expressing user icon 144 and user name 146 (see Fig. 4) based on group information 170 received from management server 300 or the like.

Distributed display image generator 164 generates distributed display image data 175 for each distribution terminal.

Screen image generator 166 has screen image 126 shown on display 120 based on output image data 128 and distributed display image data 175 for each distribution terminal. Output image data 128 may be shown as main image 130 of screen image 126.

Game device 100 that operates as the reception terminal thus generates distributed display image 140 including the image of the game being executed in the distribution terminal and the captured image, based on first stream data 11 and second stream data 13 received from the distribution terminal.

As described above, in game system 1, the distribution terminal distributes game image data 113 which is the image data of the game being executed and captured image data 143 obtained from camera 118 independently of each other. The reception terminal receives the game image data and the captured image data independently of each other and shows the image of the user of the distribution terminal as being superimposed on the image of the game being executed in the distribution terminal. By transmission of two types of images independent of each other, the image of the person obtained from camera 118 of the distribution terminal can flexibly be used in the reception terminal.

A method of superimposition of a captured image on an image of a game and distribution of the resultant image by the distribution terminal may also be assumed. With this method, for example, when a transmission terminal is unable to obtain a captured image for some reason or when a distributor does not desire to distribute a captured image, a reception terminal may be unable to receive image data itself including also an image of a game, or an image of the game from which a part of the captured image is unnaturally cut out may be shown. Game system 1 according to the present embodiment suppresses occurrence of a situation as described above.

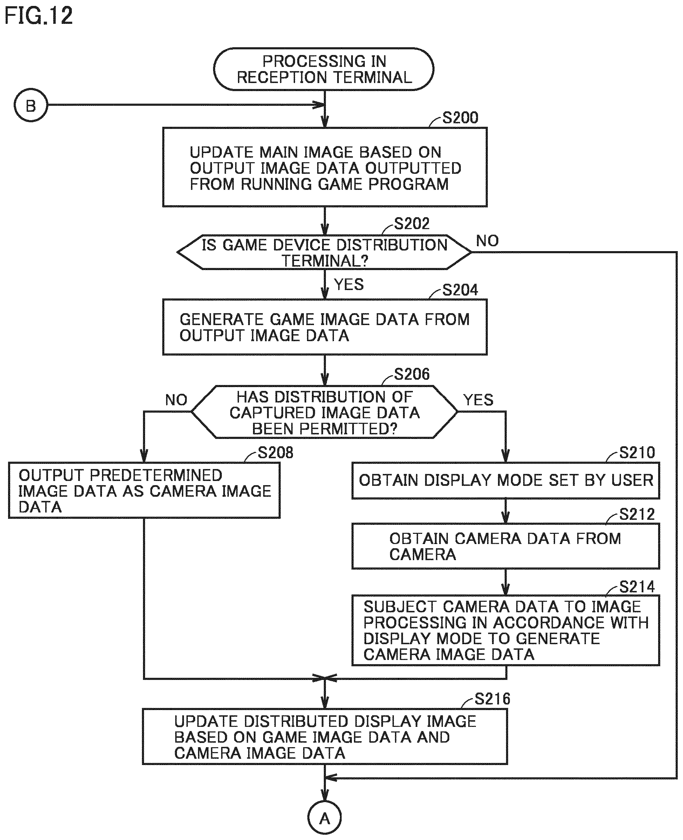

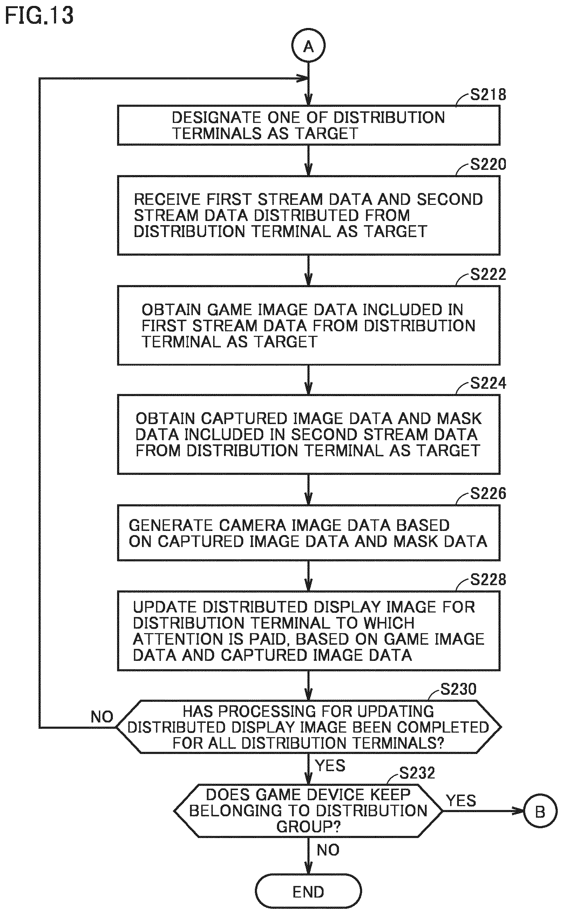

An exemplary processing procedure in the reception terminal in game system 1 according to the present embodiment will be described with reference to Figs. 12 and 13. Each step shown in Figs. 12 and 13 is performed, for example, by execution of system program 112 and distribution program 114 by processor 102 of game device 100. Processor 102 of game device 100 is assumed to execute also game program 180.

Game device 100 is assumed to perform processing for participating in a distribution group in advance to belong to a certain distribution group and to operate as the reception terminal in the distribution group.

Referring to Figs. 12 and 13, game device 100 updates main image 130 shown on display 120 based on output image data 128 outputted by running game program 180 (step S200).

Game device 100 determines whether or not it is the distribution terminal (step S202). When game device 100 is not the distribution terminal (NO in step S202), processing in steps S204 to S216 is skipped.

When game device 100 is the distribution terminal (YES in step S202), it generates game image data 113 from output image data 128 (step S204).

Game device 100 determines whether or not it is permitted to distribute captured image data (step S206).

When game device 100 is not permitted to distribute the captured image data (NO in step S206), it outputs predetermined image data (for example, a default icon) as camera image data 173 (step S208).

When game device 100 is permitted to distribute the captured image data (YES in step S206), it obtains the display mode set by the user (step S210). Game device 100 obtains camera data 119 from camera 118 (step S212), and subjects camera data 119 to image processing in accordance with the display mode to generate camera image data 173 (step S214). Processing in step S214 is similar to the processing described in connection with camera image processing unit 152 shown in Fig. 9. In step S214, the mask data does not have to be generated.

Game device 100 updates distributed display image 140 for game device 100 itself shown on display 120, based on game image data 113 and camera image data 173 (step S216).

Game device 100 designates one of distribution terminals (step S218) as the target, and receives first stream data 11 and second stream data 13 distributed from the distribution terminal as the target (step S220). First stream data 11 and second stream data 13 may be received independently of each other.

Game device 100 obtains game image data 113 included in first stream data 11 from the distribution terminal as the target (step S222). Game device 100 obtains captured image data 143 and mask data 153 included in second stream data 13 from the distribution terminal as the target (step S224). Second stream data 13 may not include mask data 153. Game device 100 generates camera image data 171 based on captured image data 143 and mask data 153 (step S226).

Game device 100 updates distributed display image 140 shown on display 120 for the distribution terminal as the target, based on game image data 113 and camera image data 171 (step S228).

Game device 100 determines whether or not processing for updating distributed display image 140 has been completed for all distribution terminals (step S230). When there is a distribution terminal for which processing for updating distributed display image 140 has not been completed (NO in step S230), processing in step S218 or later is repeated.

When processing for updating distributed display image 140 has been completed for all distribution terminals (YES in step S230), game device 100 determines whether or not it keeps belonging to the distribution group (step S232). When the game device keeps belonging to the distribution group (YES in step S232), processing in step S200 or later is repeated. When the game device no longer belongs to the distribution group (NO in step S232), the process ends.

### [G. Modification]

Exemplary processing for using mask data 153 when the contour cut-out mode is selected is described above. In addition to or instead of the contour cut-out mode, also in another mode, mask data 153 may be used to superimpose the area of the person on the game image. For example, mask data 153 may be used in the face mode. Since an area in a predetermined shape is cut out in the face mode, mask data 153 indicating the area to be cut out is distributed. In this modification, mask data 153 may be information indicating the area of the person or information indicating the area to be cut out in the distributed captured image data.

Game device 100 that falls under both of the distribution terminal and the reception terminal in Figs. 11 to 13 described above generates distributed display image 140 therefor based on the camera data outputted from camera 118 thereof and game image data 113 generated by game program 180 executed therein. Instead of such processing, the game device may receive first stream data 11 and second stream data 13 distributed thereby and generate distributed display image 140 therefor based on this received data.

Though exemplary processing for superimposing captured image data 143 distributed from the distribution terminal on game image data 113 (distributed display image 140) distributed from the distribution terminal is described above, captured image data 143 may be used in any manner. For example, a camera image generated based on captured image data 143 and mask data 153 may be superimposed on any image outputted by game program 180 executed in the reception terminal or on main image 130. Furthermore, the camera image may be superimposed on any image (for example, a still image of the background or the like) outputted in the reception terminal.

An example in which, when distribution of the captured image data is not permitted in the distribution terminal, second stream data 13 includes a predetermined default image instead of captured image data 143 is described above. At this time, if mask data 153 all pixel values of which are "0" is also simultaneously distributed, camera image 148 is not shown in the reception terminal regardless of whether or not second stream data 13 includes captured image data 143. Then, while captured image data 143 generated from the camera data is constantly distributed from the distribution terminal, the pixel value of mask data 153 may be varied as appropriate to control whether or not to show camera image 148 in the reception terminal.

In game system 1 according to the present embodiment, the distribution terminal may distribute not only an image for the distribution terminal itself but also voice and sound uttered by the user. Voice and sound may be distributed together with the image or may be distributed in different stream data.

While certain example systems, methods, devices, and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing method comprising:
distributing (S122), at a distribution terminal (100), first data (11) and second data (13), the first data (11) comprising image data (113) of a game being executed, the second data (13) comprising captured image data (143) obtained from a camera (118) and area data (153) indicating an area of a person comprised in the captured image data;
receiving (S220), at a reception terminal (100), the first data and the second data from the distribution terminal; and
generating (S228) based on the area data, at the reception terminal (100), a distributed display image (140) in which the area of the person in the captured image data is shown superimposed on an image of the game being executed in the distribution terminal.

2. The information processing method according to claim 1, wherein
in the second data, the captured image data is compressed with a first compression method and the area data is compressed with a second compression method different from the first compression method.

3. The information processing method according to claim 2, wherein
the second compression method is less in data loss than the first compression method.

4. The information processing method according to claim 2 or 3, wherein
the first compression method is lossy compression, and
the second compression method is lossless compression.

5. The information processing method according to any of claims 1 to 4, wherein
the second data is stream data in conformity with H.264 standard, and
the second data comprises image stream data comprising the captured image data and non-image stream data comprising the area data.

6. The information processing method according to claim 5, wherein
the image stream data is each an NAL unit comprising control information (141) indicating that the image data is comprised and one frame of the captured image data, and
the non-image stream data is each an NAL unit comprising control information (151) indicating that non-image data is comprised and one frame of the area data.

7. The information processing method according to any of claims 1 to 6, wherein
the generating the distributed display image comprises setting, based on the area data comprised in the second data, an area other than the area of the person in the captured image data comprised in the first data such that the image of the game being executed, on which the area other than the area of the person is to be superimposed, is preferentially shown.

8. The information processing method according to any of claims 1 to 7, wherein
the area data is generated based on a contour of the person comprised in the captured image data.

9. An information processing system (1) configured to perform the information processing method according to any of claims 1 to 8.

10. An information processing apparatus (100) configured to operate as the distribution terminal in the information processing method according to any of claims 1 to 8.

11. An information processing apparatus (100) configured to operate as the reception terminal in the information processing method according to any of claims 1 to 8.

12. A computer program (114) configured to cause a computer to perform the information processing method according to any of claims 1 to 8.

13. An information processing method comprising:
distributing (S122) first data (11) and second data (13), the first data (11) comprising image data (113) of a game being executed, the second data (13) comprising captured image data (143) obtained from a camera (118) and area data (153) indicating an area of a person comprised in the captured image data; and
receiving (S228) the first data and the second data from a distribution terminal and generating based on the area data, a distributed display image (140) in which the area of the person in the captured image data is shown superimposed on an image of the game being executed in the distribution terminal.

14. An information processing apparatus (100) configured to perform the information processing method according to claim 13.

15. A computer program (114) configured to cause a computer to perform the information processing method according to claim 13.
